# EUROPÄISCHE PATENTSCHRIFT

(11) **EP 0 287 588 B1**
(45) Veröffentlichungstag und Bekanntmachung des Hinweises auf die Patenterteilung: **09.11.1994**
(21) Anmeldenummer: 87906374.1
(22) Anmeldetag: 07.10.1987
(51) Int. Cl.: A61C 19/00

(54) **VERFAHREN UND VORRICHTUNG ZUM FREIHALTEN VON FLUIDFÜHRENDEN LEITUNGEN ZAHNÄRTZLICHER HANDSTÜCKE**
PROCESS AND DEVICE FOR KEEPING OPEN FLUID DUCTS OF DENTAL TOOL-HOLDERS
PROCEDE ET DISPOSITIF DE DEGAGEMENT DE CONDUITS DE FLUIDES DE PORTE-OUTILS DENTAIRES

(30) Priorität: 07.10.1986 AT 2662/86
(43) Veröffentlichungstag der Anmeldung: 26.10.1988
(73) Patentinhaber: DENTALWERK BÜRMOOS GESELLSCHAFT M.B.H., 5111 Bürmoos (AT)
(72) Erfinder: MALATA, Peter, A-5111 Bürmoos (AT); OBERASCHER, Josef, A-5112 Lamprechtshausen (AT)
(74) Vertreter: Barger, Erich, Dipl.-Ing.
(86) Internationale Anmeldenummer: AT8700055
(87) Internationale Veröffentlichungsnummer: WO8802621

(56) Entgegenhaltungen:
- FR-A- 2 425 844
- FR-A- 2 453 351
- FR-A- 2 499 525
- US-A- 3 707 042
- US-A- 4 544 355

## Beschreibung

Die Erfindung betrifft ein Verfahren und eine Vorrichtung nach dem ersten Teil der Ansprüche 1 bzw. 5. Ein derartiges Verfahren bzw. eine derartige Vorrichtung sind aus der US-A-4 544 355 bekannt. Die Erfindung betrifft ferner eine Vorrichtung nach dem ersten Teil von Anspruch 4. Die Merkmale des ersten Teils von Anspruch 4 sind allgemein bekannt von handelsüblichen Adaptern, die seit langem zwischen zahnärztlichen Handstüchen und deren Versorgungsschläuchen verwendet werden.

Bei zahnärztlichen Handstücken u.dgl. ist es üblich, über den Versorgungsschlauch Wasser oder ein Gas-Flüssigkeitsgemisch in Form eines Sprays durch das Handstück hindurch zu einer am Werkzeugkopf vorgesehenen Austrittdüse zu führen, durch die ein entsprechend gerichteter Strahl oder Spray zur Kühlung der vom Werkzeug bearbeiteten Stelle auf diese gerichtet wird. Das Kühlmittel wird dabei im Handstück durch oft sehr verwickelt verlaufende Kanäle und Leitungen kleinen Querschnittes geführt. Nach Beendigung der Benützung des Handstückes trocknet der in den Kanälen und Leitungen verbliebene Rest des Kühlmittels ein, was wachsende Ablagerungen bedingt und schließlich zu Verstopfungen führt.

Die Reinigung dieser Kanäle und Leitungen ist wegen des vielfach geknickten Verlaufes und des kleinen Querschnittes schwierig. Es gab bisher keine Möglichkeit, die Bildung dieser Rückstände zu verhindern oder zumindest zu vermindern.

Es sind zur Reinigung zahnärztlicher Handstücke Vorrichtungen, wie die aus der DE-OS 31 04 237, bekannt, mit denen die beweglichen Teile von Handstücken gereinigt und geschmiert werden, wobei bevorzugt vorgesehen ist, die beweglichen Teile während des Schmier- und Reinigungsvorganges zu bewegen, um die Wirksamkiet der Schmierung bzw. Reinigung zu erhöhen. Bei diesen Vorrichtungen wird jedoch das der Erfindung zugrundeliegende Problem - die Reinigung der Kühlmittelzufuhrleitungen - nicht berührt.

Aus der US-PS 4 544 355 ist ein Reinigungsgerät bekannt, das es ermöglicht, Handstücke mit unterschiedlich genormten Anschlußenden auf das Reinigungsgerät aufzustecken und zu reinigen. Es wird in dieser Druckschrift angegeben, daß ein Pflegemittel verwendet werden kann, das aus einem flüssigen Reinigungsmittel und/oder Schmiermittel, beispielsweise Öl besteht, das gegebenenfalls mit einem Lösungsmittel und/oder mit einem gasförmigen Treibmittel gemischt ist.

Über den Betrieb dieses Gerätes wird bei der Beschreibung des technischen Hintergrundes der Erfindung ausgesagt, daß nach dem Durchgang des Pflegemittels durch das Handstück, bewirkt durch ein Druckmittel oder ein Antriebsmittel oder durch komprimierte Luft, ein Trocknen des Handstückes durchgeführt wird, so daß beispielsweise das Lösungsmittel verdampft und durch das Druckmittel aus dem Handstück ausgeblasen wird, während die Ölkomponente im Handstück verbleibt. Kein einziges der in dieser Druckschrift genannten oder gezeigten Handstücke weist Kühlmittelkanäle auf.

Es ist somit auch aus dieser Druckschrift nur ein Reinigungsverfahren bekannt, das a) Hohlräume bzw. Hohlleitungen mit relativ großem Querschnitt betrifft und b) zu einem Verdampfen zumindest eines Teiles der Pflegeflüssigkeit führt, wobei ein Verbleiben des Restes in den Kanälen sogar gewünscht und angestrebt wird.

Es ist gegenüber dem nachgewiesenen Stand der Technik das objektive Ziel der Erfindung, ein Verfahren zur Verminderung oder Verhütung von Ablagerungen in Wasser oder ein Gasflüssigkeitsgemisch führenden Kühlmittelleitungen zahnärztlicher Handstücke anzugeben, um die oben genannten Nachteile zu beseitigen.

Erfindungsgemäß ist das Verfahren dadurch gekennzeichnet, daß die Leitungen nach Beendigung der Benützung des Handstückes mittels eines unter Druck stehenden gasförmigen Mediums frei bzw. trockengeblasen werden. Diese Maßnahme stellt sicher, daß die in den Kanälen bzw. Leitungen verbliebene Kühlflüssigkeit nicht in den Leitungen verdampft und verhindert somit wirksam die Bildung von Ablagerungen.

Vorteilhafterweise ist das verwendete gasförmige Medium ein Gasgemisch, bevorzugt Luft. Diese Ausführungsform besitzt den Vorteil, die im zahnärztlichen Alltag nahezu immer zur Verfügung stehende Druckluft verwenden zu können und ist somit kostengünstig.

Gemäß einer anderen Ausführungsform ist das unter Druck stehende gasförmige Medium Flüssiggas. Dadurch wird eine besonders gründliche Reinigung der Kanäle erzielt.

Es ist ein weiteres Ziel der Erfindung zur Durchführung des erfindungsgemäßen Verfahrens geeignete Vorrichtungen anzugeben. Vorbekannte Reinigungsgeräte haben durchwegs nur Vorkehrungen zur Reinigung der Hohlräume zahnärztlicher Handstück getroffen, in denen bewegliche mechanische Bauteile untergebracht sind. Bei Verwendung mit anderen Geräten, die auch über Kühlmittelleitungen verfügten, wurden derartige Leitungen in einem völlig undefinierten Zustand versetzt, wobei aber festgehalten werden muß, daß bei keinem vorbekannten Reinigungsgerät die Existenz derartiger Leitungen auch nur erwähnt worden wäre.

Erfindungsgemäß weist eine erste Vorrichtung zur Behandlung von Wasser oder ein Gas-Flüssigkeitsgemisch führenden Kühlmittelleitungen eines zahnärztlichen Handstückes, ein Aufsteckende zur Aufnahme eines Handstückes und ein Einsteckende zur Aufnahme des mit dem Handstück verbindbaren Anschlußteiles auf, wobei die Außenkonfiguration des Aufsteckendes, der Innenkonfiguration des Einsteckendes komplementär entspricht. Gekennzeichnet ist eine derartige Vorrichtung, die Ähnlichkeit mit den handelsüblichen Zwischenstücken zur Verbinndung eines Versorgungsschlauches mit einem Handstück aufweist, dadurch, daß mindestens ein Durchgangskanal vom Einsteckende zum Aufsteckende führt und dabei an nicht kongruenten Stellen der Enden endet, sodaß er am Aufsteckende in einem von diesem und dem aufgesetzten Handstück gebildeten Raum endet, in den auch die zu behandelnden Leitungen münden und am Einsteckende in einem Raum, in dem die Gaszufuhr des Anschlußteiles mündet. Durch diese Maßnahme ist es möglich, den bei jedem zahnärztlichen Behandlungsstuhl vorhandenen Anschlußschlauch direkt zur Behandlung der Kühlmittelleitungen eines Handstückes zu verwenden.

Eine andere erfindungsgemäße Vorrichtung geht von der Vorrichtung, wie sie in der US-PS 4 544 355 geoffenbart ist, bzw. der ihr ähnlichen Vorrichtung der DE-A1 31 04 237, aus und ist im Gegensatz zu diesen vorbekannten Vorrichtungen zur Behandlung von Wasser oder ein Gas-Flüssigkeitsgemisch führenden Kühlmittelleitungen eines zahnärztlichen Handstückes bestimmt und weist ein Aufsteckende zur Aufnahme des Handstückes auf, wobei die Außenkonfiguration des Aufsteckendes der Innenkonfiguration des kuppelseitigen Endes des Handstückes komplementär entspricht, wobei erfindungsgemäß vorgesehen ist, daß die Vorrichtung einen ersten Durchgangskanal aufweist, der im Aufsteckende in einer ersten Mündung endet und dessen anderes Ende mit einer Quelle eines unter Druck stehenden gasförmigen Mediums verbindbar ist, wobei weiters ein zweiter Kanal vorgesehen ist, der von einer Anschlußstelle für eine übliche Schmiereinrichtung ausgeht und in einen im Ansteckende gebildeten zur Aufnahme der beweglichen Teile des Handstückes bestimmten und somit in Aufsteckrichtung des Handstückes hin, offenen Hohlraum mündet, wobei vorgesehen ist, daß die erste Mündung außerhalb dieses Hohlraumes liegt.

Die erfindungsgemäße Vorrichtung wird an Hand der in der Zeichnung dargestellten beispielsweisen Ausführungsformen näher erläutert. Dabei zeigen die
Fig. 1a und 1b analoge Vorrichtungen für zwei verschiedene Anschlußnormen im Schnitt;
Fig. 2 zeigt eine Version, bei der gleichzeitig zum Durchblasen der Fluidkanäle die Reinigung und Schmierung der Antriebsgruppe erfolgen kann und die
Fig. 3a, 3b und 3c zeigen eine pistolenförmige Vorrichtung mit einem austauschbaren Adapter für verschieden angetriebene Handstücke.

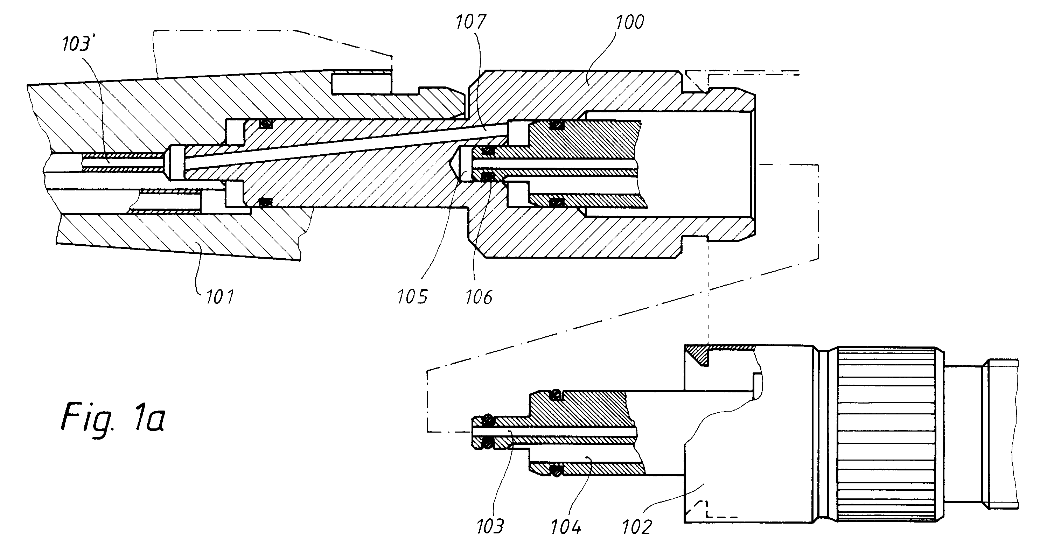

Die Ausführungsform gemäß Fig. 1a weist eine Hülle 100 auf, deren vorderes Ende komplementär zum hinteren Ende eines Handstückes 101 ausgebildet ist. Das hintere Ende 100 wiederum ist komplementär zum vorderen Ende eines Anschlußteiles 102. Im Anschlußteil 102 ist eine Fluidleitung 103 und eine Druckluftleitung 104 vorgesehen. Wenn die Hülse 100 zwischen dem Anschlußteil 102 und dem Handstück 101 eingesetzt ist, ist die Fluidleitung durch die Sackbohrung 105 und Dichtungen 106 verschlossen und die Druckluftleitung 104 durch eine Verbindungsbohrung 107 mit der Fluidleitung 103' des Handstückes verbunden. Beim Einschalten der Druckluft wird daher der Fluidkanal 103' des Handstückes ausgeblasen.

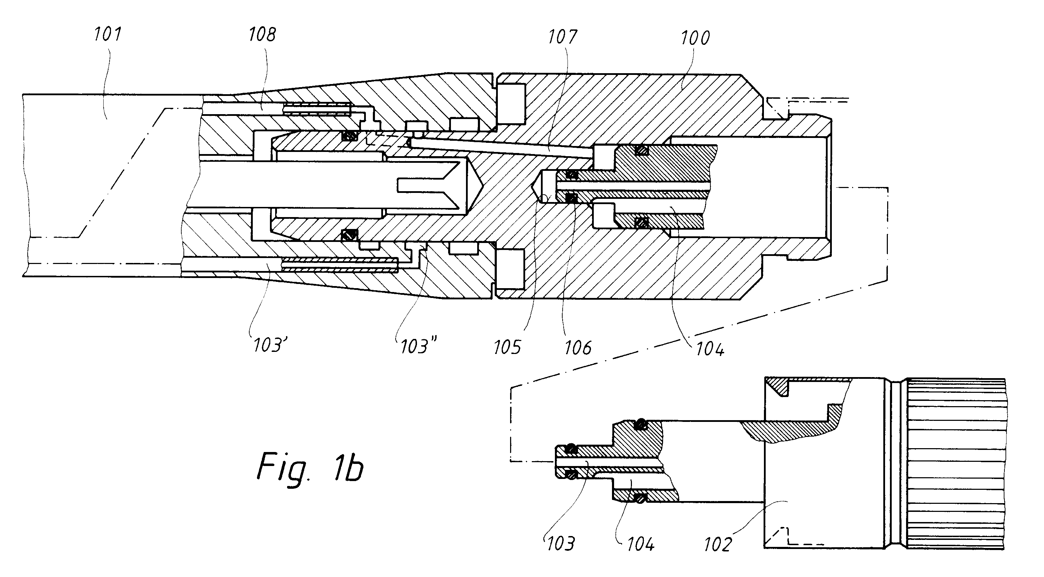

Fig. 1b zeigt eine analoge Vorrichtung für ein mechanisch getriebenes Handstück 101, bei dem zur Kühlung ein Spray auf die Arbeitsstelle gerichtet ist. Dieser Spray wird durch Flüssigkeit aus dem Flüssigkeitskanal 103' und der Luft aus dem Luftkanal 108 gebildet. Der Flüssigkeitskanal 103' wird durch einen Ringkanal 103'' und eine Verbindungsbohrung 107 mit der Druckluftzuleitung 104 eines Anschlußteiles 102 verbunden und bei Betätigung der Druckluftzufuhr ausgeblasen.

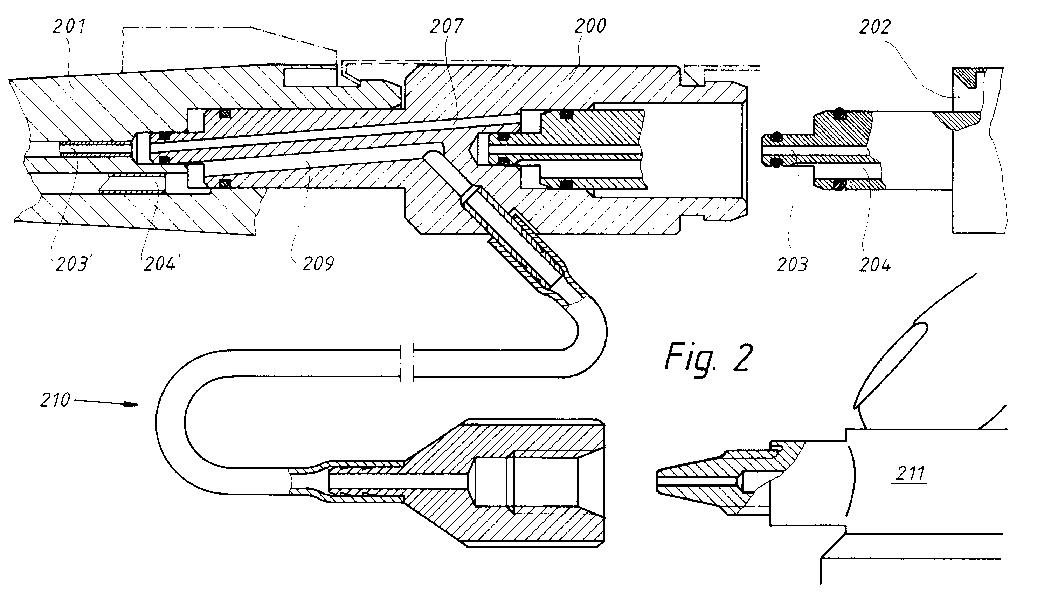

Die Ausführungsform gemäß Fig. 2 erlaubt es, gleichzeitig mit dem Ausblasen der Fluidkanäle im Handstück auch die Reinigung und Schmierung der Getriebeteile des Handstückes durchzuführen. Bei eingesetztem Zwischenstück 200 ist der Fluidkanal 203' durch die Verbindungsbohrung 207 mit der Druckluftzufuhr 204 des Handstückes 202 verbunden. Ein Druckluftkanal 204' des Handstückes, der beim Betrieb mit der Druckluftzufuhr 204 in Verbindung steht, ist bei aufgesetztem Reinigungsstück 200 mittels eines Verbindungskanals 209 und eines flexiblen Adapters 210 mit einem unter Druck stehenden oder unter Druck bringbaren Vorratsbehälter 211 für das Schmier- und Reinigungsmittel verbunden. Durch Betätigen der Druckluftzufuhr des Anschlußteiles 202 werden die Fluidkanäle des Handstückes gereinigt und durch Betätigen der Reinigungsvorrichtung 211 wird die Mechanik des Handstückes 201 gereinigt und geschmiert.

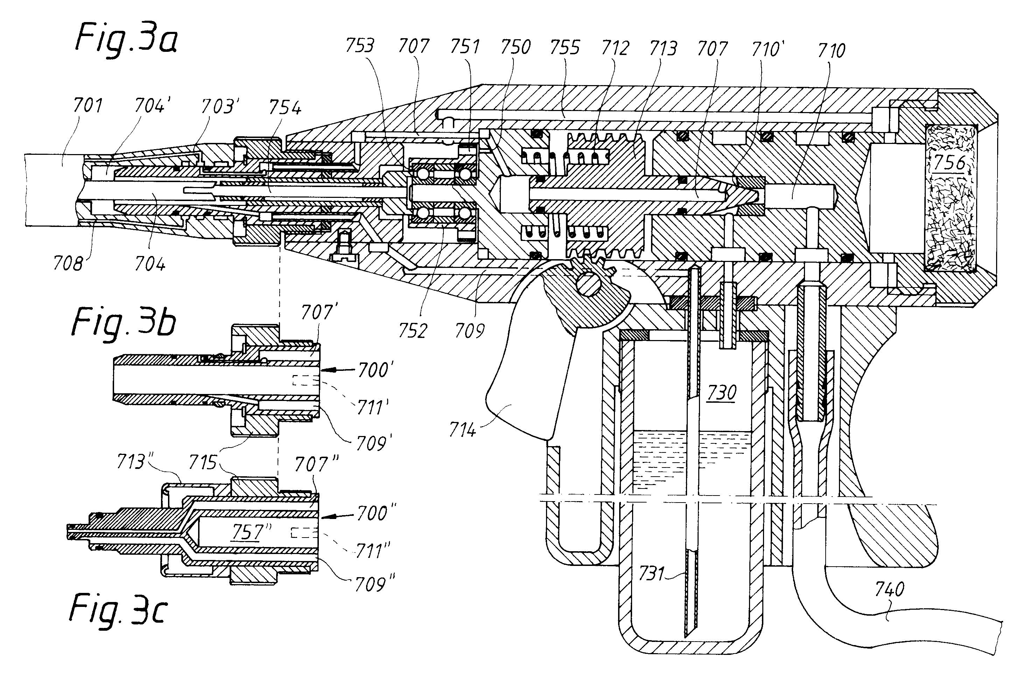

Eine druckluftgetriebene Vorrichtung in Pistolenform zur Reinigung der Fluidkanäle und der beweglichen Teile eines Handstückes, mit auswechselbarem Adapter für verschiedene Ausführungsformen, Antriebsarten und Anschlußnormen von Handstücken, ist in den Fig. 3a bis 3c dargestellt. Die Ausblasvorrichtung ist mittels eines flexiblen Schlauches 740 mit einer Druckluftquelle verbunden und ansonsten frei beweglich. Die zugeführte Druckluft gelangt durch ein Nadelventil 710, welches mittels einer Handhabe 714 gegen die Kraft einer Feder 712 geöffnet werden kann. Eine Abzweigung setzt den Schmiermitteldruckbehälter 730 unter Druck und fördert Schmier- und Reinigungsmittel durch das Steigrohr 731 und einen Verbindungskanal 709 zu einer zugeordneten Öffnung 709' bzw. 709'' eines Adapters 700' oder 700''. In Fig. 3a ist ein Adapter für ein Handstück 701 mit mechanischem Antrieb eingesetzt dargestellt. Der Verbindungskanal 709' führt das Reinigungs- und Schmiermittel zu den beweglichen Teilen 704 des Handstückes. Der nicht abgezweigte Teil der Druckluft gelangt durch eine Folge von Bohrungen 707 zur Ausblasbohrung 707' bzw. 707'' des jeweils eingesetzten Adapters und von dort über einen Kreisringkanal zu den Fluidkanälen 703'.

Die durch die Bohrungen 707 strömende Druckluft wird im gezeigten Ausführungsbeispiel bei 750 nochmals angezapft und treibt Schaufeln 751 einer Turbine 752. Diese Turbine setzt über ein Kugelplanetengetriebe 753 und eine Welle 754 die beweglichen Teile 704 des aufgesetzten Handstückes, während diese Teile gereinigt und geschmiert werden, in Bewegung. die Abluft der Turbine 752 gelangt über eine Abluftbohrung 755 zu einem Schalldämpfer 756 und schließlich ins Freie.

Beim Reinigen eines luftgetriebenen Instrumentes wird ein Adapter 700'' verwendet, bei dem die Welle 754 in ein Sackloch 757 ragt. Die Druckluft- und Reinigungsflüssigkeitsverbindungen 707'' und 709'' sind bei diesem Adapter analog zum Adapter 700' vorgesehen.

Die Adapter weisen an ihren hinteren Enden Blindbohrungen 711' bzw. 711'' auf. Diese Bohrungen korrespondieren mit Stiften in der pistolenartigen Halterung, um zu verhindern, daß die Adapter verdreht eingesetzt werden. Der Ölbehälter 730 ist bevorzugt durchsichtig ausgeführt, um im Bereich unterhalb des Handgriffes eine Ölstandskontrolle zu ermöglichen. Es wäre selbstverständlich auch möglich, statt der Druckförderung des Reinigungs- und Schmiermittels eine zerstäubte Zufuhr vorzusehen. Der Adapter 700'' ist mit einer Arretierungsvorrichtung 713 versehen, die jedoch nicht zwingend ist. Das Auswechseln der Adapter geschieht mittels drehbar gelagerter Befestigungsschrauben 715.

Selbstverständlich ist es möglich, bei einer Vorrichtung gemäß Fig. 3 statt der schlauchförmigen Verbindung 740 zu einer externen Preßluftversorgung einen Druckgasbehälter vorzusehen, der mit der Vorrichtung gemäß der Fig. 3 fest, bevorzugt einstückig, verbunden ist.

Die Erfindung ist nicht auf die dargestellten Ausführungsbeispiele beschränkt, sondern kann vielfach variiert und abgewandelt werden. So ist es möglich, speziell auf die einzelnen, genormten Anschlußstücke abgestimmte Vorrichtungen zu konzipieren oder Elemente der gezeigten Ausführungsbeispiele miteinander in anderer als der dargestellten Weise zu kombinieren ohne die Erfindung zu verlassen.

## Patentansprüche

1. Verfahren zur Verminderung oder Verhütung von Ablagerungen in Wasser oder ein Gas-Flüssigkeitsgemisch führende Kühlmittelleitungen zahnärztlicher Handstücke, dadurch gekennzeichnet, daß die Leitungen nach Beendigung der Benützung des Handstückes mittels eines unter Druck stehenden gasförmigen Mediums frei bzw. trocken geblasen werden.

2. Verfahren nach Anspruch 1, dadurch gekennzeichnet, daß das Medium ein Gasgemisch, vorzugsweise Luft ist.

3. Verfahren nach Anspruch 1, dadurch gekennzeichnet, daß das Medium Flüssiggas ist.

4. Vorrichtung zur Behandlung von Wasser oder ein Gas-Flüssigkeitsgemisch führenden Kühlmittelleitungen eines zahnärztlichen Handstückes mit:
einem Aufsteckende zur Aufnahme eines Handstückes (101, 201) und
einem Einsteckende zur Aufnahme des mit dem Handstück verbindbaren Anschlußteiles (102, 202), wobei die Außenkonfiguration des Aufsteckendes der Innenkonfiguration des Einsteckendes komplementär entspricht,
dadurch gekennzeichnet, daß
mindestens ein Durchgangskanal (107, 207) vom Einsteckende zum Aufsteckende führt und dabei an nicht kongruenten Stellen der Enden endet, sodaß er am Aufsteckende in einem von diesem und dem aufgesetzten Handstück gebildeten Raum endet, in den auch die zu behandelnden Leitungen (103', 203') münden und am Einsteckende in einem Raum, in dem die Gaszufuhr des Anschlußteiles mündet.

5. Vorrichtung zur Behandlung von Wasser oder ein Gas-Flüssigkeitsgemisch führenden Kühlmittelleitungen eines zahnärztlichen Handstückes mit einem Aufsteckende zur Aufnahme des Handstückes (701), wobei die Außenkonfiguration des Aufsteckendes der Innenkonfiguration des kuppelseitigen Endes des Handstückes komplementär entspricht,
dadurch gekennzeichnet, daß
die Vorrichtung einen ersten Durchgangskanal (707, 707', 707'') aufweist, der im Aufsteckende in einer ersten Mündung endet und dessen anderes Ende mit einer Quelle eines unter Druck stehenden, gasförmigen Mediums verbindbar ist, wobei weiters
ein zweiter Kanal (709, 709', 709'') vorgesehen ist, der von einer Anschlußstelle für eine übliche Schmiereinrichtung ausgeht und in einen, im Ansteckende gebildeten, zur Aufnahme der beweglichen Teile des Handstückes bestimmten und somit in Aufsteckrichtung des Handstückes hin offenen Hohlraum (704') mündet und daß
die erste Mündung außerhalb dieses Hohlraumes liegt.

6. Vorrichtung nach Anspruch 5, dadurch gekennzeichnet, daß der Raum, von dem der erste Durchgangskanal (707, 707', 707'') ausgeht, eine zylindrische Kammer (710) ist, die einen, entgegen der Kraft einer Feder (712), verschiebbaren Kolben (713) enthält.

7. Vorrichtung nach Anspruch 4, dadurch gekennzeichnet, daß sie mit dem Schlauchanschlußstück des zu behandelnden Handstückes verbunden ist und Kanäle für die Durchleitung von Wasser und Antriebsluft aufweist und mit einem federbelasteten, von Hand zu betätigenden Dreiwegventil versehen ist, mit dem der Durchgangskanal fallweise unter Trennung von der Wasserzuleitung mit der Luftzuleitung des Schlauchanschlußstückes verbindbar ist.

8. Vorrichtung nach Anspruch 5, dadurch gekennzeichnet, daß sie Pistolenform aufweist und mittels eines Schlauches (740) an eine Druckluftquelle anschließbar ist, daß sie weiters ein Ventil (710'), vorzugsweise ein Nadelventil zur Regelung der zuzuführenden Druckluftmenge aufweist, und daß die zugeführte Druckluft die Druckförderung einer Schmierund Reinigungsflüssigkeit durch Schmierkanäle (709, 709', 709'') zu den beweglichen Teilen (704) des zu reinigenden Handstückes (701), den Antrieb einer Turbine (752) sowie gegebenenfalls mittels einer Welle (754) die Bewegung der beweglichen Teile (704) des zu reinigenden Handstückes (701) und das Ausblasen der fluidführenden Kanäle (703') bewirkt, wobei Adapter (700', 700'') zur Reinigung von Handstücken unterschiedlicher Normierung und unterschiedlicher Antriebsart auf der Vorrichtung aufsetzbar sind.

## Claims

1. Process for reducing or preventing deposits in coolant ducts, which carry water or a gas-liquid mixture, of dental tool-holders, characterised in that the ducts are blown clear or dry by means of a gaseous medium under pressure after the tool-holder has been used.

2. Process according to claim 1, characterised in that the medium is a gas mixture, preferably air.

3. Process according to claim 1, characterised in that the medium is liquid gas.

4. Device for treating coolant ducts, which carry water or a gas-liquid mixture, of a dental tool-holder, comprising:
a slip-on end for holding a tool-holder (101, 210) and an insertion end for holding the connection part (102, 202), which can be joined to the tool-holder,
the outer configuration of the slip-on end being complementary to the inner configuration of the insertion end,
characterised in that
at least one through-channel (107, 207) leads from the insertion end to the slip-on end, terminating at incongruent points at the ends, so that it terminates at the slip-on end in a space which is formed by the latter and the attached tool-holder and into which the ducts (103', 203') to be treated also open and at the insertion end in a space into which the gas supply of the connection part opens.

5. Device for treating coolant ducts, which carry water or a gas-liquid mixture, of a dental tool-holder, comprising a slip-on end for holding the tool-holder (701), the outer configuration of the slip-on end being complementary to the inner configuration of the coupling end of the tool-holder,
characterised in that
the device comprises a first through-channel (707, 707', 707'') which terminates at the slip-on end in a first opening and the other end of which can be joined to a source of a gaseous medium under pressure, a second channel (709, 709', 709'') also being provided which extends from a connection point for a conventional lubricating device and opens into a cavity (704') which is formed in the attachment end, is adapted to hold the mobile parts of the tool-holder and is therefore open towards the slip-on direction of the tool-holder, and that the first opening lies outside of this cavity.

6. Device according to claim 5, characterised in that the space from which the first through-channel (707, 707', 707'') extends is a cylindrical chamber (710) containing a piston (713) which can be displaced against the resilience of a spring (712).

7. Device according to claim 4, characterised in that it is joined to the hose connection piece of the tool-holder to be treated, comprises channels for the passage of water and driving air and is provided with a spring-loaded three-way valve which is manually actuated and by which the through-channel can in certain cases be joined to the air supply duct of the hose connection piece while being separated from the water supply duct.

8. Device according to claim 5, characterised in that it is in the shape of a pistol and can be connected to a compressed-air source by means of a hose (740), that it also comprises a valve (710'), preferably a needle valve, for regulating the quantity of compressed air to be supplied, and that the compressed air which is supplied is responsible for the pressure feed of a lubricating and cleaning liquid through lubricating channels (709, 709', 709'') to the mobile parts (704) of the tool-holder (701) to be cleaned, for the drive of a turbine (752) and, if applicable, for the movement of the mobile parts (704) of the tool-holder (701) to be cleaned by means of a shaft (754) and for blowing out the fluid-carrying channels (703'), and adapters (700', 700'') can be attached to the device for cleaning tool-holders of a different standardization and different type of drive.

## Revendications

1. Procédé pour réduire ou pour empêcher des dépôts dans les conduits de refroidissement dans des pièces à main dentaires, qui véhiculent de l'eau ou un mélange gaz/liquide, caractérisé en ce qu'après avoir terminé d'utiliser la pièce à main on libère ou on sèche les conduits par soufflage au moyen d'un fluide gazeux sous pression.

2. Procédé selon la revendication 1, caractérisé en ce que le fluide est un mélange gazeux, de préférence de l'air.

3. Procédé selon la revendication 1, caractérisé en ce que le fluide est un gaz liquide.

4. Appareil pour le traitement des conduits de refroidissement d'une pièce à main dentaire, qui véhiculent de l'eau ou un mélange gaz/liquide, comprenant:
- une extrémité d'emboîtement pour recevoir une pièce à main (101, 201), et
- une extrémité d'enfichage afin de recevoir la pièce de raccordement (102, 202) destinée à être reliée à la pièce à main,
la configuration extérieure de l'extrémité d'emboîtement correspondant de façon complémentaire à la configuration intérieure de l'extrémité d'enfichage,
caractérisé en ce que
au moins un conduit traversant (107, 207) mène depuis l'extrémité d'enfichage jusqu'à l'extrémité d'emboîtement et se termine à des emplacements non congruents des extrémités, de sorte qu'il se termine à l'extrémité d'emboîtement dans un espace formé par cette extrémité et par la pièce à main mise en place, espace dans lequel débouchent également les conduites à traiter (103', 203'), et en ce que le conduit traversant débouche à l'extrémité d'enfichage dans un espace dans lequel débouche l'alimentation en gaz de la pièce de raccordement.

5. Appareil pour le traitement de conduits de refroidissement d'une pièce à main dentaire, qui véhiculent de l'eau ou un mélange gaz/liquide, comprenant une extrémité d'emboîtement pour recevoir la pièce à main (701), la configuration extérieure de l'extrémité d'emboîtement correspondant de manière complémentaire à la configuration intérieure de l'extrémité de la pièce à main côté accouplement,
caractérisé en ce que l'appareil comporte un premier canal traversant (707, 707', 707'') qui se termine dans l'extrémité d'emboîtement dans une première embouchure, et dont l'autre extrémité peut être reliée à une source d'un fluide gazeux sous pression, en ce qu'il est en outre prévu un second conduit (709, 709', 709'') qui part d'un emplacement de raccordement pour un dispositif de lubrification habituel et qui débouche dans une cavité creuse (704') formée dans l'extrémité d'emboîtement et destinée à la réception des pièces mobiles de la pièce à main, et par conséquent ouverte dans la direction d'emboîtement de la pièce à main, et en ce que la première embouchure est située à l'extérieur de cette cavité creuse.

6. Appareil selon la revendication 5, caractérisé en ce que l'espace a partir duquel débute le premier conduit traversant (707, 707', 707'') est une chambre cylindrique (710) qui contient un piston (713) susceptible d'être déplacé à l'encontre de la force d'un ressort (712).

7. Appareil selon la revendication 4, caractérisé en ce qu'il est relié à l'élément formant raccord de tuyauterie de la pièce à main à traiter, et qu'il comporte des conduits pour le passage d'eau et d'air moteur, et en ce qu'il comporte me valve à trois voies chargée par un ressort et actionnée à la main, au moyen de laquelle le conduit traversant peut être relié selon le cas, et avec séparation de la conduite d'amenée d'eau, avec la conduite d'amenée d'air de la pièce de raccordement de tuyauterie.

8. Appareil selon la revendication 5, caractérisé en ce qu'il a la forme d'un pistolet et qu'il est susceptible d'être raccordé au moyen d'un tuyau (740) à une source d'air comprimé, en ce qu'il comporte en outre une valve (710'), de préférence une valve à aiguille afin de réguler la quantité d'air comprimé à véhiculer, et en ce que l'air comprimé alimenté assure l'entraînement sous pression d'un liquide de lubrification et de nettoyage via des conduits de lubrification (709, 709', 709'') vers les pièces mobiles (704) de la pièce à main (701) à nettoyer, qui assure l'entraînement d'une turbine (752) et le cas échéant le déplacement des pièces mobiles (704) de la pièce à main à nettoyer (701), au moyen d'un arbre (754), et qui assure le soufflage des conduits (703') de passage des fluides, et en ce que pour le nettoyage de pièces à main correspondant à des normes différentes et à des types d'entraînement différents, des adaptateurs (700', 700'') sont susceptibles d'être mis en place sur l'appareil.
